# EUROPÄISCHE PATENTANMELDUNG

(11) **EP 1 329 304 A2**
(43) Veröffentlichungstag der Anmeldung: **23.07.2003**
(21) Anmeldenummer: 03000039.2
(22) Anmeldetag: 07.01.2003
(51) Int. Cl.: B29C 65/16

(54) **Verfahren zum Verbinden von Kunststoffteilen durch eine Kombination von Verpressen und Laserschweissen**

(30) Priorität: 17.01.2002 DE 10201543
(71) Anmelder: Bayer Aktiengesellschaft, 51368 Leverkusen (DE)
(72) Erfinder: Grosser, Ulrich, 51515 Kürten (DE); Krause, Frank, 51469 Bergisch Gladbach (DE)

(57) **Zusammenfassung**

Es wird ein Verfahren zum Verbinden von Kunststoffbauteilen durch eine Kombination von Verpressen und Laserschweißen beschrieben, wobei an den Verbindungsstellen (1) der Bauteile (3, 4) wenigstens ein erstes Bauteil (3) eine elastische und/oder komprirnierbare Dichtlippe (5) aufweist, wobei die Dichtlippe (5) durch Aufeinanderpressen der Bauteile (3, 4) elastisch verformt wird, bei Aufrechterhalten des äußeren Druckes der Laserstrahl auf die Verbindungsstelle (1) geleitet wird, und durch gezielte Bestrahlung der Verbindungsstelle (1) die Bauteile (3, 4) miteinander verbunden werden.

## Beschreibung

Die Erfindung betrifft ein Verfahren zum Verbinden von Kunststoffteilen durch eine Kombination von Verpressen und Laserschweißen unter Verwendung einer elastischen Dichtlippe im Bereich der Verbindungsstelle.

Aufgabe der Erfindung ist es, ein Fügeverfahren bereitzustellen, das die Nachteile der bekannten Verfahren vermeidet und großserientauglich einsetzbar ist.

Die Aufgabe wird erfindungsgemäß dadurch gelöst, dass in einem Verfahren der eingangs genannten Art zwei oder mehrere Einzelbauteile durch ein mechanisches Fügeverfahren verbunden und mittels eines Laserstrahles gedichtet werden.

Gegenstand der Erfindung ist ein Verfahren zum Verbinden von Kunststoffbauteilen durch eine Kombination von Verpressen und Laserschweißen, dadurch gekennzeichnet, dass an den Verbindungsstellen der Bauteile wenigstens ein erstes Bauteil eine elastische und/oder komprimierbare Dichtlippe aufweist, dass die Dichtlippe durch Aufeinanderpressen der Bauteile elastisch verformt wird, dass bei Aufrechterhalten des äußeren Druckes der Laserstrahl auf die Verbindungsstelle geleitet wird, und durch gezielte Bestrahlung der Verbindungsstelle die Bauteile miteinander verbunden werden.

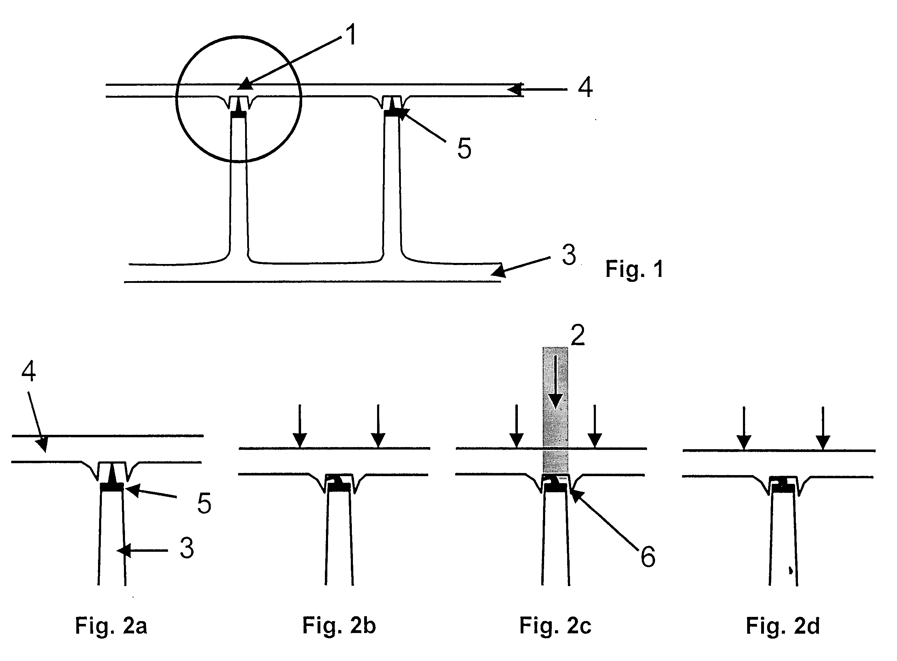

Bei der Herstellung komplexer Bauteile in Mehrschalentechnologie (wie z.B. Sauganlagen) wird häufig ein großer Umschlingungswinkel α der Einzelteile zueinander notwendig. Dadurch entsteht entlang der Kontaktflächen eine sehr unterschiedliche Relativbewegung zwischen den Einzelteilen. Im unteren Bereich der Werkstücke herrscht ein größerer Pressdruck als in den Randbereichen (vergl. Figur 1). Für alle gängigen Fügeverfahren wie z.B. Schweißen, Kleben stellt diese Gegebenheit eine besondere Schwierigkeit dar, insbesondere in Verbindung mit den vorhandenen Fertigungstoleranzen der Bauteile. Bei dem hier vorgestellten Verfahren werden die Einzelteile mit definierter Kraft zusammengepresst und anschließend von außen mittels eines Laserstrahls an den Dichtstellen aufgeschmolzen. Durch den vorliegenden Druck und das Aufschmelzen der Grenzflächen kommt es zu einer Verbindung wie beim Schweißen. Da diese Verbindung u.U. nicht wie eine nach dem Stand der Technik ausgeführte konventionelle Schweißnaht belastet werden kann, wird bevorzugt die Verbindungsfestigkeit durch Verklipsen oder Verschrauben der Bauteile erhöht. Um die Toleranzen der zu verbindenden und zu dichtenden Bauteile besser ausgleichen zu können, wird auf einem der Teile (vorzugsweise auf dem inneren) eine Kompressionslippe aus gleichem oder anspritzbarem Material angebracht. Durch das Verpressen der Einzelteile wird diese Kompressionslippe deformiert und schafft trotz Bauteiltolleranzen eine vollständige Verbindung der Teile. Außerdem wird entlang der gesamten zu dichtenden Naht der notwendige "Fügedruck" erreicht. Das äußere Material sollte für dieses Verfahren bevorzugt aus lasertransparentem Material hergestellt werden, so dass der Laserstrahl ohne zu großen Leistungsverlust die äußere Wand des Bauteiles durchstrahlen kann.

Als Kunststoff für die Bauteile kommen alle gängigen Kunststoffe, insbesondere thermoplastische oder duroplastische Kunststoffe in Frage. Bevorzugt sind PA, PC, ABS, Polyalkylene, insbesondere PE oder PP, Polyester, insbesondere PET oder PBT, oder mögliche Kombinationen dieser Polymere.

Bevorzugt ist ein Verfahren, bei dem die Dichtlippe eine höhere Absorptionsfähigkeit für das Laserlicht aufweist.

Als Laserlichtquelle wurde bevorzugt eine Laserstrahlquelle im Bereich von 800 bis 1.100 nm, Wellenlänge wie z. B. Hochleistungsdiodenlaser oder Nd: YAG Laser verwendet.

Als bevorzugtes Material für die Dichtlippe wird ein Kunststoff ausgewählt, der gute Hafteigenschaften zum ersten sowie zweiten Bauteil besitzt. Bevorzugt sind Polyamid, Polyester, insbesondere PBT, TPU oder Polypropylen.

Eine besondere Festigkeit der Verbindung wird erreicht, wenn die Verbindungsstelle der Bauteile als Nut / Federkombination ausgebildet ist.

Weiterer Gegenstand der Erfindung ist die Verwendung der nach dem Verfahren erhältlichen Verbindungsteile als KFZ-Teile, insbesondere mehrteilige Saugrohre, Kühlerelemente sowie druckbelastete mehrteilige Kunststoffbauteile für Sanitär und Wasserinstallation sowie Haushaltsgeräte.

Die Erfindung wird nachfolgend anhand der Figuren durch zwei Beispiele, welche jedoch keine Beschränkung der Erfindung darstellt, näher erläutert.

Es zeigen:
- Figur 1: zwei Kunststoffbauteile 3, 4 vor dem Pressen und Verschweißen
- Figur 2a: ein vergrößertes Detail aus Figur 1
- Figur 2b: den Pressvorgang
- Figur 2c: die Laserbestrahlung
- Figur 2d: die fertige Verbindung der Bauteile 3, 4
- Figur 3: zwei Komponenten 3, 4 eines Luft-Saugrohres vor dem Verbinden im Querschnitt
- Figur 4: einen Längsschnitt durch das Saugrohr nach Figur 3

### Beispiele

### Beispiel 1

Figur 1 zeigt im Querschnitt die Verbindung zwischen zwei Bauteilen 3 und 4 aus PA 6 (glasfaserverstärktes Polyamid 6).

Das Bauteil 3 weist an der Verbindungsstelle 1 Dichtlippen 5 aus elastischem TPU auf, die in Richtung der Stege 6 ausgerichtet sind.

Gemäß Figur 1 a (Detailansicht von Figur 1) werden die Bauteile 3 und 4 positioniert und dann aufeinander gepresst (siehe Figur 2 b).

Der Laserstrahl 2 (Nd: YAG-Laser; kontinuierlich betrieben mit einer Leistung von 35 W) wird durch das Bauteil 4 durchgestrahlt (Figur 2 c) und auf die Dichtlippe 5 gelenkt, welche aufgeschmolzen wird und sich mit dem Material des Bauteiles 4 verschweißt (Figur 2 d).

Die geschaffene Verbindungsstelle 1 war druckdicht bis mindestens 5 bar.

### Beispiel 2

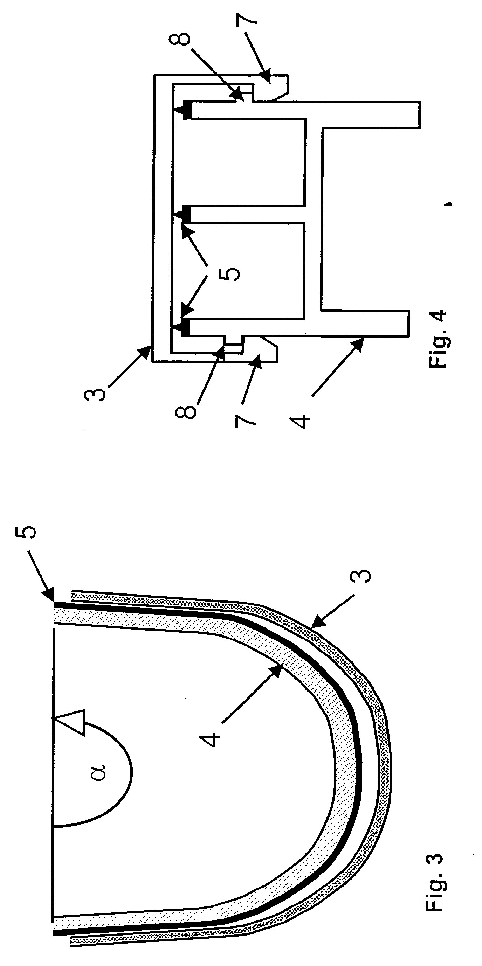

In Figur 3 ist ein Querschnitt durch zwei Saugrohrkomponenten 3, 4 in Teilansicht vergrößert gezeigt.

Das obere Bauteil 4 aus PA 6, glasfaserverstärkt, ist mit einer dünnen Dichtlippe 5 aus unverstärktem PA 6 versehen.

Figur 2 zeigt den Längsschnitt durch die Bauteile 3, 4.

Die Bauteile 3, 4 werden aufeinandergepresst und die Dichtlippen 5 werden mittels Laserschweißung (Nd: YAG Laser, kontinuierlicher Betrieb, 35 W) durch das Bauteil 3 hindurch mit der Auflagefläche des Bauteils 3 fest verbunden.

Der Kraftschluss zwischen den Bauteilen 3 und 4 wird hier im Wesentlichen durch eine Schnappverbindung aus Schnapphaken 7 und Hinterschnitt 8 im Bauteil 4 bewirkt.

## Patentansprüche

1. Verfahren zum Verbinden von Kunststoffbauteilen durch eine Kombination von Verpressen und Laserschweißen, **dadurch gekennzeichnet, dass** an den Verbindungsstellen (1) der Bauteile (3, 4) wenigstens ein erstes Bauteil (3) eine elastische und/oder komprimierbare Dichtlippe (5) aufweist, dass die Dichtlippe (5) durch Aufeinanderpressen der Bauteile (3, 4) elastisch verformt wird, dass bei Aufrechterhalten des äußeren Druckes der Laserstrahl (2) auf die Verbindungsstelle (1) geleitet wird, und durch gezielte Bestrahlung der Verbindungsstelle (1) die Bauteile (3, 4) miteinander verbunden werden.

2. Verfahren nach Anspruch 1, **dadurch gekennzeichnet, dass** die Dichtlippe (5) eine höhere Absorptionsfähigkeit für das Laserlicht aufweist als die durchstrahlten Bauteile (3) oder (4).

3. Verfahren nach Anspruch 1 oder 2, **dadurch gekennzeichnet, dass** als Laserlichtquelle ein Laser (2) im Wellenlängenbereich von 800 bis 1.100 nm, z. B. Dioden (810 nm) oder Nd: YAG Laser (1.060 nm) verwendet wird.

4. Verfahren nach einem der Ansprüche 1 bis 3, **dadurch gekennzeichnet, dass** als Material für die Dichtlippe (5) ein Kunststoff ausgewählt aus der Reihe: PA, Polyester, insbesondere PBT, TPU oder PP verwendet wird.

5. Verfahren nach einem der Ansprüche 1 bis 4, **dadurch gekennzeichnet, dass** die Verbindungsstelle (1) als Nut / Federkombination ausgebildet ist.
